# EUROPÄISCHE PATENTSCHRIFT

(11) **EP 2 642 811 B1**
(45) Veröffentlichungstag und Bekanntmachung des Hinweises auf die Patenterteilung: **26.11.2014**
(21) Anmeldenummer: 12161006.7
(22) Anmeldetag: 23.03.2012
(51) Int. Cl.: H04W 72/04, H04L 12/40, H04L 12/24

(54) **Vorrichtung sowie Verfahren zum Festlegen eines Übertragungskanals eines Slaves**
Device and method for fixing a transmission channel of a slave
Dispositif et procédé de fixation d'un canal de transmission d'un esclave

(43) Veröffentlichungstag der Anmeldung: 25.09.2013
(73) Patentinhaber: Siemens Aktiengesellschaft, 80333 München (DE)
(72) Erfinder: Premke, Markus, 93055 Regensburg (DE)

(56) Entgegenhaltungen:
- EP-A1- 2 410 802
- FR-A1- 2 928 516

## Beschreibung

Die Erfindung betrifft ein Verfahren zum Festlegen eines Übertragungskanals innerhalb eines mehrkanaligen Kommunikationssystems für einen Slave des Kommunikationssystems sowie eine Vorrichtung eines mehrkanaligen Kommunikationssystems.

Das mehrkanalige Kommunikationssystem wird vorzugsweise im Bereich der industriellen Automatisierungstechnik eingesetzt. Da es sich um ein mehrkanaliges Kommunikationssystem handelt weist das Kommunikationssystem mindestens zwei Übertragungskanäle auf, über welche Daten zwischen Kommunikationssystemteilnehmern ausgetauscht werden können. Kommunikationssystemteilnehmer des mehrkanaligen Kommunikationssystems sind insbesondere ein Master und mindestens zwei Slave. Der Master ist mit den Slaves des Kommunikationssystems verbunden. Zur Kommunikation wird den Slaves ein eindeutiger separater Übertragungskanal zugewiesen, über welchen die Datenübertragung zwischen dem Master und den jeweiligen Slave erfolgt.

Im Bereich der industriellen Automatisierungstechnik wird üblicherweise zwischen normalen Applikationen und sicherheitsgerichteten Applikationen unterschieden. Sicherheitsgerichtete Applikationen müssen im Vergleich zu den normalen Applikationen höhere Sicherheitsanforderungen erfüllen. Bei sicherheitsgerichteten Applikationen muss insbesondere im Vergleich zu normalen Applikationen die Kommunikation und/oder der Kommunikationsteilnehmer an sich sicherheitsgerichteter ausgebildet sein. Es kann somit zwischen zwei Slavearten unterschieden werden; sichere Slaves und normale Slaves. Sichere Slaves sind im Vergleich zu den normalen Slaves sicherheitsgerichtet ausgebildet und/oder können'sicherheitsgerichtet innerhalb des Kommunikationssystems kommunizieren.

Aus der EP 2410 802 A1 ist ein Basisstation und ein Verfahren zum Betreiben einer Basisstation eines zellularen Kommunikationsnetzwerkes bekannt. In Abhängigkeit einer Ermittelten Entfernung sowie des unterstützten Kommunikationsstandards zwischen einem besagten Endgerät und einer besagten Basisstation werden eine oder mehrere Kommunikationsressourcen dem besagten Endgerät und der besagten Basisstation zugewiesen.

Es ist Aufgabe der vorliegenden Erfindung ein verbessertes mehrkanaliges Kommunikationssystem bereitzustellen. Innerhalb eines derartigen Kommunikationssystems kann vorzugsweise ein Master mit sicheren Slaves und normalen Slaves kommunizieren.

Diese Aufgabe wird gelöst durch ein Verfahren gemäß Anspruch 1 und eine Vorrichtung gemäß Anspruch 9.

Vorteilhafte Weiterbildungen der Erfindung sind in den abhängigen Ansprüchen 2 bis 8 sowie 10 bis 12 angegeben.

Das Kommunikationssystem umfasst mindestens zwei Slavearten. Als erste Slavearten die sicheren Slaves und als zweite Slaveart die normalen Slaves. Die sicheren Slaves sind im Vergleich zu den normalen Slaves sicherheitsgerichtet ausgebildet, d.h. sie kommunizieren innerhalb des Kommunikationssystems sicherheitsgerichtet, weisen einen sicherheitsgerichteten Aufbau auf und/oder sind für eine sicherheitsgerichtete Applikation innerhalb des Kommunikationssystems vorgesehen.

Das mehrkanalige Kommunikationssystem weist mindestens zwei Übertragungskanäle auf. Der Übertragungskanal charakterisiert insbesondere eine spezifische Trägerfrequenz innerhalb des Kommunikationssystems, über welche der Datenaustausch mit dem jeweiligen Kommunikationsteilnehmer (Master, Slave) stattfindet. Die Kommunikation zwischen dem Master und den Slaves erfolgt insbesondere jeweils mittels eines dem jeweiligen Slave zugewiesenen charakteristischen Übertragungskanals des Kommunikationssystems. Zwei Slaves kommunizieren somit innerhalb eines Kommunikationszyklus nicht über den gleichen Übertragungskanal mit dem Master, sondern jeweils über den für ihn festgelegten Übertragungskanal.

Der mit der Erfindung erzielte Vorteil besteht darin, dass den sicheren Slaves im Vergleich zu den normalen Slaves gezielt ein stabilerer Übertragungskanal des Kommunikationssystems zugewiesen werden kann. Auf diese Weise kann hinsichtlich der sicherheitsgerichteten Applikation des Kommunikationssystems ein zuverlässigeres stabileres System geschaffen werden.

Das Festlegen des Übertragungskanals des Slaves erfolgt insbesondere automatisch durch eine entsprechende Vorrichtung (z.B. durch den Master oder einer Adressiervorrichtung).

In einer vorteilhaften Ausführungsform der Erfindung wird zwischen einem stabilen Übertragungskanal und einem normalen Übertragungskanal unterschieden, wobei zum Festlegen des Übertragungskanals des Slaves zunächst die Slaveart des Slaves ermittelt wird und in Abhängigkeit seiner Slaveart sein Übertragungskanal bestimmt wird.

Das Ermitteln der Slaveart erfolgt vorzugsweise durch das Auslesen des Profils des Slaves. Die Slaveart (sicherer Slave oder normaler Slave) steht insbesondere in der Kennung, insbesondere im Profil bzw. in der Gerätebeschreibungsdatei, des jeweiligen Slaves.

Sichere Slaves sind insbesondere für eine sichere Kommunikation innerhalb des Kommunikationssystems vorgesehen. Normale Slaves für eine normale Kommunikation innerhalb des Kommunikationssystems. Bei sicheren Slaves wird vorzugsweise im Gegensatz zu den normalen Slaves zusätzlich zu ihren Nutzdaten einen CRC Wert (Cyclic Redundancy Check) innerhalb ihres Telegrams übertragen. Auf diese Weise kann der Empfänger des Telegramms (der Slave und/oder der Master) eine Sicherheitsüberprüfung hinsichtlich des sicheren Telegramms durchführen. Sichere Slaves führen somit im Gegensatz zu den normalen Slaves bei ihrer Kommunikation vorzugsweise eine CRC Prüfung durch.

In einer weiteren vorteilhaften Ausführungsform der Erfindung wird für einen sicheren Slave der stabile Übertragungskanal und für einen normalen Slave der normale Übertragungskanal festgelegt.

In einer weiteren vorteilhaften Ausführungsform der Erfindung weist der stabile Übertragungskanal einen höheren Signalrauschabstand auf als der normale Übertragungskanal.

Innerhalb des Kommunikationssystems werden insbesondere hinsichtlich der zur Verfügung stehenden Übertragungskanäle mindestens zwei Gruppen gebildet. Stabile Übertragungskanäle und normale Übertragungskanäle.

Der stabile Übertragungskanal mit dem niedrigsten Signalrauschabstand weist insbesondere einen höheren Signalrauschabstand auf als der normale Übertragungskanal mit dem höchsten Signalrauschabstand.

In einer weiteren vorteilhaften Ausführungsform der Erfindung erfolgt das Verfahren automatisch während des Gerätehochlaufs des Masters durch den Master.

In einer weiteren vorteilhaften Ausführungsform der Erfindung umfasst das Kommunikationssystem den Master, den sicheren Slave und den normalen Slave, wobei der Master die Slaveart der Slaves ermittelt und für den sicheren Slave gezielt den stabilen Übertragungskanal und für den normalen Slave gezielt den normalen Übertragungskanal zur Kommunikation innerhalb des Kommunikationssystems festlegt.

In einer weiteren vorteilhaften Ausführungsform der Erfindung ist die Vorrichtung dazu ausgebildet das Verfahren nach einem der Ansprüche 1 bis 6 auszuführen. Die Vorrichtung ist insbesondere ein Master oder ein Adressiergerät des Kommunikationssystems.

In einer weiteren vorteilhaften Ausführungsform der Erfindung kann die Vorrichtung die Slaveart eines Slaves des Kommunikationssystems eigenständig ermitteln und legt in Abhängigkeit der ermittelten Slaveart des Slaves gezielt den Übertragungskanal des Slaves innerhalb des Kommunikationssystems fest.

In einer vorteilhaften Ausführungsform der Erfindung ist das mehrkanalige Kommunikationssystem ein OFDM Kommunikationssystem. OFDM steht für Orthogonal Frequency-Division Multiplexing; deutsch: Orthogonales Frequenzmultiplexverfahren.

OFDM ist als eine spezielle Implementierung der Multicarrier-Modulation ein Modulationsverfahren, welches mehrere orthogonale Träger zur digitalen Datenübertragung verwendet.

Insbesondere handelt es sich um ein DMT Kommunikationssystem (DMT = Diskrete Multitone Transmission), welches eine vorteilhafte Ausbildung des OFDM Kommunikationssystems ist.

In einer weiteren vorteilhaften Ausführungsform der Erfindung besteht ein Übertragungskanal grundsätzlich aus 2 Trägerfrequenzen A und B, jeweils für Up- und Downlink. Diese beiden Trägerfrequenzen sind vorzugsweise redundant ausgebildet, wovon eine die gültigen Nutzdaten des Kanals repräsentiert.

In einer weiteren vorteilhaften Ausführungsform der Erfindung ist die maximale Zykluszeit innerhalb des Kommunikationssystems 4 ms. Sie liegt insbesondere zwischen 1 und 4 ms. Die Zykluszeit ist insbesondere die Zeit, in welcher der Master an alle Slaves des Kommunikationssystems ein Telegramm senden und vorzugsweise ein Telgramm aller Slaves empfangen kann.

In einer weiteren vorteilhaften Ausführungsform der Erfindung ist das Kommunikationssystem ein AS-i System (Aktuator Sensor Interface System). Der Master ist somit ein AS-i Master, der normale Slave ein AS-i Slave und der sichere Slave ein sicherer AS-i Slave (z.B. ein AS-i Safety At Work Slave).

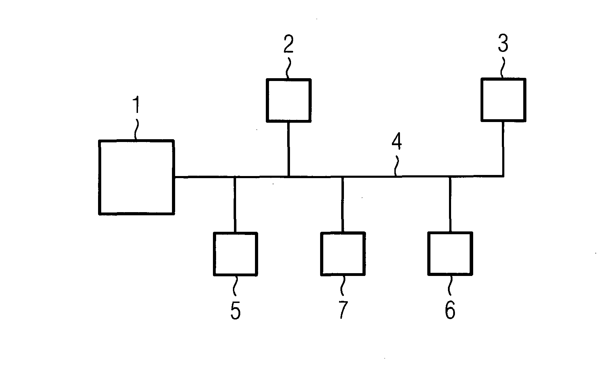

Im Folgenden werden die Erfindung und Ausgestaltungen der Erfindung anhand des in der Figur dargestellten Ausführungsbeispiels näher beschrieben und erläutert.

Die Figur zeigt eine schematische Darstellung eines mehrkanaligen Kommunikationssystems. Das Kommunikationssystem umfasst einen Master 1, einen ersten normalen Slave 2, einen zweiten normalen Slave 3, einen ersten sicheren Slave 5, einen zweiten sicheren Slave 6, ein Netzteil 7 und einen Kommunikationsbus 4.

Der Master 1 ist über den Kommunikationsbus 4 mit seinen Kommunikationssystemteilnehmern 2,3,5,6 verbunden. Der Kommunikationsbus 4 ist zweiadrig ausgebildet, wobei neben der Kommunikation ebenso eine Energieversorgung der Kommunikationssystemteilnehmer 2,3,5,6 über den Kommunikationsbus 4 ermöglicht wird. Hierfür ist das Netzteil 7 mit dem Kommunikationsbus 4 verbunden. Die Arbeitsspannung auf dem Kommunikationsbus beträgt zwischen 20 Volt und 40 Volt, insbesondere 30 Volt.

Dem Master 1 stehen zur Kommunikation mit den Slaves 2,3,5,6 mehrere Übertragungskanäle (Trägerfrequenzen) zur Verfügung. Es handelt sich somit um ein mehrkanaliges Kommunikationssystem.

Der Master 1 unterscheidet hinsichtlich der zur Verfügung stehenden Übertragungskanäle zwischen stabilen Übertragungskanälen und normalen Übertragungskanälen. Stabile Übertragungskanäle weisen gegenüber den normalen Übertragungskanälen einen höheren Signalrauschabstand auf. Im Master ist insbesondere ein erster Schwellwert hinsichtlich des Signalrauschabstands hinterlegt, so dass er die Gruppe der normalen Übertragungskanäle (unterschreiten den ersten Schwellwert) und die Gruppe der stabilen Übertragungskanälen (überschreiten den ersten Schwellwert) bilden kann.

Im Master 1 ist ferner ein zweiter Schwellwert hinterlegt. Mittels des zweiten Schwellwertes wird die Mindestanforderung hinsichtlich des Signalrauschabstandes bezüglich der Übertragungskanäle mit den normalen Slaves 2,3 definiert. Jeder Übertragungskanal für einen normalen Slave 2,3 muss oberhalb des zweiten Schwellwerts liegen, so dass stets die Mindestanforderung hinsichtlich des Signalrauschabstandes erfüllt wird. Auf diese Weise kann durch den Master 1 eine zuverlässige Kommunikation mit den normalen Slaves 2,3 gewährleistet werden.

Der Master 1 ermittelt somit hinsichtlich seines Kommunikationsspektrums, vorzugsweise während seines Gerätehochlaufs, die Qualität der zur Verfügung stehenden Übertragungskanäle des Kommunikationssystems und kategorisiert die Übertragungskanäle entsprechend des ersten und zweiten Schwellwerts. Wird der erste Schwellwert überschritten, so liegt ein stabiler Übertragungskanal für einen sicheren Slave vor. Wird der erste Schwellwert unterschritten und der zweite Schwellwert überstiegen, so liegt ein normaler Kommunikationskanal für einen normalen Slave vor. Wird der zweite Schwellwert unterschritten, so wird dieser Kommunikationskanal nicht für die Kommunikation mit einem normalen und/oder sicheren Slave verwendet.

Der Master 1 ermittelt somit automatisch während seines Gerätehochlaufs die stabilen und normalen Übertragungskanäle. Ferner ermittelt er automatisch mittels einer Abfrage über den Kommunikationsbus 4 die Slaveart des am Kommunikationsbus 4 angeschlossenen Slaves. Hierfür wertet der Master 1 insbesondere das Slaveprofil (z.B. die Gerätebeschreibungsdatei) des angeschlossenen Slaves aus.

Das Kommunikationssystem weist normale Slaves 2,3 und sichere Slaves 5,6 auf. Sichere Slaves 5,6 sind im Gegensatz zu den normalen Slaves 2,3 sicherheitsgerichtet ausgebildet. Die Kommunikation zwischen sicheren Salves 5,6 und dem Master 1 weist im Vergleich zur Kommunikation zwischen den normalen Slaves 2,3 und dem Master 1 einen CRC-Wert auf. Hierdurch kann seitens des Empfängers (Master 1 bzw. sicherer Slave 5,6) eine CRC-Prüfung durchgeführt werden. Die CRC-Prüfung kann im Master 1, insbesondere durch eine gesonderte sichere Einheit, aber auch dezentral vom Master 1, durch eine sichere Vorrichtung, erfolgen. Zusätzlich oder alternativ ist ein sicherer Slave vorzugsweise redundant hinsichtlich Teile seiner Hardware und/oder Teile seiner Software ausgebildet.

Nachdem der Master 1 die Slaveart des angeschlossenen Salves ermittelt hat, wird der Übertragungskanal des angeschlossenen Slaves des Kommunikationssystems gezielt in Abhängigkeit der Slaveart des Slaves vom Master 1 festgelegt. Dem angeschlossenen Slave wird hierbei gezielt sein spezifischer Übertragungskanal innerhalb des Kommunikationssystems zugewiesen.

Ergab die Auswertung des Slaveprofils des angeschlossenen Slaves, dass es sich bei dem Slave um einen sicheren Slave 5,6 handelt, so wird ihm durch den Master 1 einer der stabilen Übertragungskanäle zugewiesen. Die Kommunikation des sicheren Slaves 5,6 erfolgt anschließend über den ihm zugewiesenen stabilen Übertragungskanal, bis ihm ein neuer stabiler Übertragungskanal zugewiesen wird.

Ergab die Auswertung des Slaveprofils hingegen, dass es sich bei dem Slave um einen normalen Slave 2,3 handelt, so wird ihm durch den Master 1 einer der normalen Übertragungskanäle zugewiesen. Die Kommunikation des normalen Slaves 2,3 erfolgt anschließend über den ihm zugewiesenen normalen Übertragungskanal, bis ihm ein neuer normaler Übertragungskanal zugewiesen wird.

Der Master behandelt hinsichtlich der Vergabe der stabilen Übertragungskanäle die sicheren Slaves gezielt bevorzugt. Bevorzugt ist in diesem Zusammenhang so zu verstehen, dass aus Stabilitätsgründen, bedingt durch das verwendete Übertragungskonzept (OFDM), eine bevorzugte Zuweisung der "stabilsten" Übertragungskanäle (Signalrauschabstand am höchsten) an die sensibelsten Busteilnehmer, also Sicherheitsgeräte (sichere Slaves), vergeben werden.

Dieses spezielle Frequenzmanagement ist für das Kommunikationssystem von großem Vorteil, da dem sicherheitsgerichteten Teil des Kommunikationssystems gezielt die stabilen Kommunikationskanäle zugewiesen werden. Auf diese Weise wird das sicherheitsgerichtete System / die sicherheitsgerichtete Applikation des Kommunikationssystems stabiler und somit zuverlässiger ausgebildet.

Die Sicherheits-Ausfallwahrscheinlichkeiten, aufgrund der Sicherheits-Anforderungen, können durch die gezielte Übertragungskanalvergabe minimiert werden. Da für Standardgeräte die Anzahl der möglichen am Bus ausgefallenen Telegramme meist höher ist als für Sicherheits-Geräte wird hierdurch dass Kommunikationssystem nicht beeinträchtigt.

Es ist auch vorstellbar, dass bei dem Festlegen eines Übertragungskanals eines neu angeschlossenen Slaves nicht nur auf Reservekanäle (noch nicht durch Slaves des Kommunikationssystems belegte Übertragungskanäle) verwiesen wird, sondern im Betrieb jeweils dynamische die Übertragungskanäle der bereits angeschlossenen Slaves angepasst werden. Dabei ist gemeint, dass für einen sicheren Slave explizit immer die stabilsten im Kommunikationssystem verfügbaren Übertragungskanäle verwendet werden. Auf diese Weise kann ein äußerst stabiles System hinsichtlich der sicherheitsgerichteten Applikation des Kommunikationssystems geschaffen werden.

Die Übertragungskanäle können, wenn nötig, während des laufend Betriebs wechseln, so dass nach einem Kommunikationszyklus für einen angeschlossenen Slave (bei welchem bereits durch den Master 1 eine Übertragungskanalvergabe stattgefunden hat) ein Wechsel gegenüber dem vorhergehenden Übertragungskanal stattfindet. Dadurch kann die Stabilität der sensibelsten Teilnehmer (sichere Slaves) merklich gesteigert und der "Nachteil" der "strengeren" Überwachung gegenüber Standardkomponenten (normale Slaves) ausgeglichen werden.

Es ist ebenso denkbar, dass die Gruppe der stabilen Übertragungskanäle sowie der sichern Slaves weiter untergliedert wird. Insbesondere ist eine hierarchische Struktur hinsichtlich der stabilen Übertragungskanäle sowie der sicheren Slaves vorstellbar. Die sicheren Slaves werden hiefür z.B. hinsichtlich ihrer Sicherheitsrelevanz hierarchisch untergliedert. Die stabilen Übertragungskanäle werden hinsichtlich ihres Signalrauschsabstandes hierarchisch untergliedert. Dem sicheren Slave mit der höchsten Sicherheitsrelevanz bezüglich der angeschlossenen sicheren Slaves wird der stabilste Übertragungskanal, d.h. der Kanal mit dem höchsten Signalrauschabstand, zugewiesen. Die restlichen zur Verfügung stehenden stabilen Übertragungskanäle werden absteigend der Sicherheitsrelevanz der am Kommunikationssystem angeschlossenen sicheren Slaves auf die sicheren Slaves verteilt. Auf diese Weise erfolgt eine hierarchische Verteilung der stabilen Übertragungskanäle auf die sicheren Slaves hinsichtlich deren Sicherheitsrelevanz.

Neben der Unterscheidung der Slaveart sicherer Slave und normaler Slave ist es ebenso denkbar, dass die normalen Slaves einer weiteren Untergliederung unterzogen werden. Bezüglich dieser Untergruppen der normalen Slaveart kann der Master ebenso eine gezielte Vergabe der Übertragungskanäle durchführen, so dass z.B. den Slaves der ersten normalen Slaveart stabilere Übertragungskanäle, d.h. die Trägerfrequenz weist einen höherer Signalrauschabstand auf, zugewiesen werden als den Slaves der zweiten normalen Slaveart. Der Signalrauschabstand der Trägerfrequenz der ersten normalen Slaveart ist jedoch geringer als der Signalrauschabstand der Trägerfrequenz der sichren Slaves.

Zum Durchführen der notwendigen Verfahrensschritte umfasst der Master 1 eine Verarbeitungseinheit. Diese Verarbeitungseinheit ermöglicht insbesondere das Ermitteln der Slaveart des angeschlossenen Slaves sowie das Festlegen des Kommunikationskanals für den angeschlossenen Slave. Durch das Festlegen des Kommunikationskanals für den angeschlossenen Slave wird insbesondere der innerhalb des Kommunikationssystems zu verwendende Kommunikationskanal für den angeschlossenen Slaves bestimmt und dem Slave mitgeteilt.

Ist das Kommunikationssystem z.B. ein AS-i System so wird die Übertragungskanalvergabe vom AS-i Master gesteuert. Der Master hat die Aufgabe, die verfügbaren Übertragungskanäle (Trägerfrequenzen), anhand von Messungen die den Signalrauschabstand bestimmen, optimal auf die verfügbaren Slaves, insbesondere im Hochlauf, zu verteilen. Auch kann es nötig sein, die Übertragungskanäle im laufenden Betrieb, aufgrund schlechter werdender Signalrauschabstandwerte der Übertragungskanäle, neu zu verteilen oder zu wechseln. Der AS-i Master hat somit die Möglichkeit, z.B. über das AS-i Profil, im Hochlauf zu erkennen, um welchen Gerätetyp es sich bei dem angeschlossenen Slave handelt (z.B. Sensor, Aktor, Sensor/Aktor, normaler Slave oder sicherer Slave). Diese Information kann er, bei der Vergabetechnik der Übertragungskanäle, vorteilhaft für die per Definition am strengsten überwachten Kommunikationsteilnehmer einsetzen. Diese sind die Safety-Geräte (Sicherheitsgeräte mit sicheren Ein- und/oder Ausgängen) und somit die sicheren Slaves.

## Patentansprüche

1. Verfahren zum Festlegen eines Übertragungskanals innerhalb eines mehrkanaligen Kommunikationssystems für einen Aktuator Sensor interface, AS-i, Slave (2,3,5,6) des Kommunikationssystems, wobei innerhalb des Kommunikationssystems ein AS-i Master (1) mit einem sicheren AS-i Slave (5,6) und mit einem normalen AS-i Salve (2,3) kommunizieren kann, wobei der Übertragungskanal eines AS-i Slaves (2,3,5,6) des Kommunikationssystems gezielt in Abhängigkeit der Slaveart des AS-i Slaves (2,3,5,6) festgelegt wird.

2. Verfahren nach Anspruch 1, wobei zwischen einem stabilen Übertragungskanal und einem normalen Übertragungskanal unterschieden wird, wobei zum Festlegen des Übertragungskanals des Slaves (2,3,5,6) zunächst die Slaveart des Slaves (2,3,5,6) ermittelt wird und in Abhängigkeit seiner Slaveart sein Übertragungskanal bestimmt wird.

3. Verfahren nach Anspruch 2, wobei für einen sicheren Slave (5,6) der stabile Übertragungskanal und für einen normalen Slave (2,3) der normale Übertragungskanal festgelegt wird.

4. Verfahren nach einem der Ansprüche 2 bis 3, wobei der stabile Übertragungskanal einen höheren Signalrauschabstand aufweist als der normale Übertragungskanal.

5. Verfahren nach einem der vorhergehenden Ansprüche, wobei das Verfahren automatisch während des Gerätehochlaufs des Masters (1) durch den Master (1) erfolgt.

6. Verfahren nach einem der vorhergehenden Ansprüche, wobei das Kommunikationssystem den Master (1), den sicheren Slave (5,6) und den normalen Slave (2,3) umfasst, wobei der Master (1) die Slaveart der Slaves (2,3,5,6) ermittelt und für den sicheren Slave (5,6) gezielt den stabilen Übertragungskanal und für den normalen Slave (2,3) gezielt den normalen Übertragungskanal zur Kommunikation innerhalb des Kommunikationssystems festlegt.

7. Verfahren nach einem der vorhergehenden Ansprüche, wobei die Kommunikation zwischen dem sicheren Salve (5,6) und dem Master (1) im Vergleich zur Kommunikation zwischen dem normalen Slave (2,3) und dem Master (1) einen CRC-Wert aufweist.

8. Verfahren nach einem der vorhergehenden Ansprüche, wobei der Master (1) über einen Kommunikationsbus (4) mit seinen Kommunikationssystemteilnehmern (2,3,5,6) verbunden ist und der Kommunikationsbus (4) zweiadrig ausgebildet ist, wobei neben der Kommunikation ebenso eine Energieversorgung der Kommunikationssystemteilnehmer (2,3,5,6) über den Kommunikationsbus 4 ermöglicht wird.

9. Vorrichtung eines mehrkanaligen Kommunikationssystems, wobei innerhalb des Kommunikationssystems ein Aktuator Sensor interface, AS-i, Master (1) mit einem sicheren AS-i Slave (5,6) und mit einem normalen AS-i Salve (2,3) kommunizieren kann, wobei die Vorrichtung den Übertragungskanal eines AS-i Slaves (2,3,5,6) des Kommunikationssystems gezielt in Abhängigkeit der Slaveart des ASi Slaves (2,3,5,6) festlegt.

10. Vorrichtung nach Anspruch 9, wobei die Vorrichtung die Slaveart eines Slaves (2,3,5,6) des Kommunikationssystems eigenständig ermitteln kann und in Abhängigkeit der ermittelten Slaveart des Slaves (2,3,5,6) gezielt den Übertragungskanal des Slaves (2,3,5,6) festlegt.

11. Vorrichtung nach Anspruch 9 oder 10, wobei die Kommunikation zwischen dem sicheren Salve (5,6) und dem Master (1) im Vergleich zur Kommunikation zwischen dem normalen Slave (2,3) und dem Master (1) einen CRC-Wert aufweist.

12. Vorrichtung nach einem der Ansprüche 9 bis 11, wobei der Master (1) über einen Kommunikationsbus (4) mit seinen Kommunikationssystemteilnehmern (2,3,5,6) verbunden ist und der Kommunikationsbus (4) zweiadrig ausgebildet ist, wobei neben der Kommunikation ebenso eine Energieversorgung der Kommunikationssystemteilnehmer (2,3,5,6) über den Kommunikationsbus 4 ermöglicht wird.

## Claims

1. Method for specifying a transmission channel within a multichannel communication system for an Actuator Sensor interface, AS-i, slave (2,3,5,6) of the communication system, wherein an AS-i master (1) can communicate with a safe AS-i slave (5,6) and with a normal AS-i slave (2,3) within the communication system, wherein the transmission channel of an AS-i slave (2,3,5,6) of the communication system is specified explicitly as a function of the slave type of the AS-i slave (2, 3, 5, 6).

2. Method according to claim 1, wherein a distinction is made between a stable transmission channel and a normal transmission channel, wherein the slave type of the slave (2,3,5,6) is determined initially in order to specify the transmission channel of the slave (2,3,5,6) and its transmission channel is determined as a function of its slave type.

3. Method according to claim 2, wherein the stable transmission channel is specified for a safe slave (5,6) and the normal transmission channel is specified for a normal slave (2,3).

4. Method according to one of claims 2 to 3, wherein the stable transmission channel has a higher signal-to-noise ratio than the normal transmission channel.

5. Method according to one of the preceding claims, wherein the method is performed automatically by the master (1) during the device power-up of the master (1).

6. Method according to one of the preceding claims, wherein the communication system comprises the master (1), the safe slave (5,6) and the normal slave (2,3), wherein the master (1) determines the slave type of the slaves (2,3,5,6) and explicitly specifies the stable transmission channel for the safe slave (5,6) and explicitly specifies the normal transmission channel for the normal slave (2,3) for the purpose of communication within the communication system.

7. Method according to one of the preceding claims, wherein, in comparison with the communication between the normal slave (2,3) and the master (1), the communication between the safe slave (5,6) and the master (1) has a CRC value.

8. Method according to one of the preceding claims, wherein the master (1) is connected to its communication system users (2,3,5,6) via a communication bus (4) and the communication bus (4) is embodied as a two-wire cabling arrangement, wherein a power supply for the communication system users (2,3,5,6) is also realised by way of the communication bus (4) in addition to the communication capability.

9. Device of a multichannel communication system, wherein an Actuator Sensor interface, AS-i, master (1) can communicate with a safe AS-i slave (5,6) and with a normal AS-i slave (2,3) within the communication system, wherein the device explicitly specifies the transmission channel of an AS-i slave (2,3,5,6) of the communication system as a function of the slave type of the AS-i slave (2,3,5,6).

10. Device according to claim 9, wherein the device can independently determine the slave type of a slave (2,3,5,6) of the communication system and explicitly specifies the transmission channel of the slave (2,3,5,6) as a function of the determined slave type of the slave (2,3,5,6).

11. Device according to claim 9 or 10, wherein, in comparison with the communication between the normal slave (2,3) and the master (1), the communication between the safe slave (5,6) and the master (1) has a CRC value.

12. Device according to one of claims 9 to 11, wherein the master (1) is connected to its communication system users (2,3,5,6) via a communication bus (4) and the communication bus (4) is embodied as a two-wire cabling arrangement, wherein a power supply for the communication system users (2,3,5,6) is also realised by way of the communication bus (4) in addition to the communication capability.

## Revendications

1. Procédé de fixation d'un canal de transmission au sein d'un système de communication à plusieurs canaux pour un esclave ( 2, 3, 5, 6 ) AS-i d'interface actionneur capteur du système de communication, dans lequel au sein du système de communication un maître ( 1 ) AS-i peut communiquer avec un esclave ( 5, 6 ) AS-i sécurisé et avec un esclave ( 2, 3 ) AS-i normal, le canal de transmission d'un esclave ( 2, 3, 5, 6 ) AS-i du système de communication étant fixé de manière ciblée en fonction du type d'esclave de l'esclave ( 2, 3, 5, 6 ) AS-i.

2. Procédé suivant la revendication 1, dans lequel on distingue entre un canal de transmission stable et un canal de transmission normal, dans lequel, pour la fixation du canal de transmission de l'esclave ( 2, 3, 5, 6 ), on détermine d'abord le type d'esclave de l'esclave ( 2, 3, 5, 6 ) et on définit son canal de transmission en fonction de son type d'esclave.

3. Procédé suivant la revendication 2, dans lequel, pour un esclave ( 5, 6 ) sécurisé, on fixe le canal de transmission stable et, pour un esclave ( 2, 3 ) normal, le canal de transmission normal.

4. Procédé suivant l'une des revendications 2 à 3, dans lequel le canal de transmission stable a une distance signal bruit plus grande que le canal de transmission normal.

5. Procédé suivant l'une des revendications précédentes, dans lequel le procédé s'effectue automatiquement par le maître ( 1 ) pendant le démarrage du maître ( 1 ).

6. Procédé suivant l'une des revendications précédentes, dans lequel le système de communication comprend le maître ( 1 ), l'esclave ( 5, 6 ) sécurisé et l'esclave ( 2, 3 ) normal, le maître ( 1 ) déterminant le type d'esclave de l'esclave ( 2, 3, 5, 6 ) et fixant, pour l'esclave ( 5, 6 ) sécurisé, de manière ciblée le canal de transmission stable et, pour l'esclave ( 2, 3 ) normal, de manière ciblée le canal de transmission normal pour la communication au sein du système de communication.

7. Procédé suivant l'une des revendications précédentes, dans lequel la communication entre l'esclave ( 5, 6 ) sécurisé et le maître ( 1 ) a une valeur CRC par rapport à la communication entre l'esclave ( 2, 3 ) normal et le maître ( 1 ).

8. Procédé suivant l'une des revendications précédentes, dans lequel le maître ( 1 ) est relié à ses participants ( 2, 3, 5, 6 ) au système de communication par un bus ( 4 ) de communication et le bus ( 4 ) de communication est bifilaire, dans lequel, outre la communication, une alimentation en énergie des participants ( 2, 3, 5, 6 ) au système de communication par le bus ( 4 ) de communication est rendue possible également.

9. Agencement d'un système de communication à plusieurs canaux, dans lequel, au sein du système de communication, un maître ( 1 ) AS-i interface actionneur capteur peut communiquer avec un esclave ( 5, 6 ) AS-i sécurisé et avec un esclave ( 2, 3 ) AS-i normal, dans lequel l'agencement fixe le canal de transmission d'un esclave ( 2, 3, 5, 6 ) AS-i du système de communication de manière ciblée en fonction du type d'esclave de l'esclave ( 2, 3, 5, 6 ) AS-i.

10. Agencement suivant la revendication 9, dans lequel l'agencement peut déterminer de manière autonome le type d'esclave d'un esclave ( 2, 3, 5, 6 ) du système de communication et fixer, en fonction du type d'esclave déterminé de l'esclave ( 2, 3, 5, 6 ), de manière ciblée le canal de transmission de l'esclave ( 2, 3, 5, 6 ).

11. Agencement suivant la revendication 9 ou 10, dans lequel la communication entre l'esclave ( 5, 6 ) sécurisé et le maître ( 1 ) a une valeur CRC par rapport à la communication entre l'esclave ( 2, 3 ) normal et le maître ( 1 ).

12. Agencement suivant l'une des revendications 9 à 11, dans lequel le maître ( 1 ) est relié à ses participants ( 2, 3, 5, 6 ) au système de communication par un bus ( 4 ) de communication et le bus ( 4 ) de communication est bifilaire, dans lequel, outre la communication, une alimentation en énergie des participants ( 2, 3, 5, 6 ) au système de communication par le bus ( 4 ) de communication est rendue possible également.
